# EUROPEAN PATENT APPLICATION

(11) **EP 4 765 601 A1**
(43) Date of publication of application: **24.06.2026**
(21) Application number: 25222125.4
(22) Date of filing: 10.12.2025
(51) Int. Cl.: H02M 1/00, H02M 1/08, H02M 1/42

(54) **POWER FACTOR CORRECTION (PFC) CIRCUITS**

(30) Priority: 17.12.2024 US 202418983513
(71) Applicant: NXP USA, Inc., Austin, TX 78735 (US)
(72) Inventor: Strijker, Joan Wichard, 5656AG Eindhoven (NL); Twelkemeijer, Remco, 5656AG Eindhoven (NL); Langeslag, Wilhemus Hinderikus Maria, 5656AG Eindhoven (NL); Degen, Peter Theodorus Johannes, 5656AG Eindhoven (NL)
(74) Representative: Krott, Michel

(57) **Abstract**

Systems and methods for Power Factor Correction (PFC) circuits are described. In various implementations, these systems and methods may be used to power the operation of any component of any electronic device. In an illustrative, non-limiting embodiment, a power supply may include: a power converter having a high-side switch, a low-side switch coupled to the high-side switch, and a bootstrap capacitor coupled between the high-side switch and the low-side switch; and a control circuit coupled to the low-side switch, the control circuit configured to activate the low-side switch and charge the bootstrap capacitor without changing an output voltage of the power converter.

## Description

### Field

This disclosure relates generally to electronic circuits, and more specifically, to Power Factor Correction (PFC) circuits with charging of bootstrap capacitors.

### Background

Power supplies convert electrical energy from a source, such as a wall outlet, into the correct voltage, current, and frequency required by electronic devices. They are used in a wide range of applications, from small gadgets to large industrial machines.

Power Factor Correction (PFC) circuits are used to improve the power factor and reduce wasted power, especially in devices that draw significant power from the mains. Converters in power supplies transform AC (alternating current) from the mains to DC (direct current) required by electronic devices and can adjust voltage levels as needed. At low output power levels, burst mode operation is used to improve efficiency. In burst mode, the power supply switches on and off periodically to maintain the output voltage, reducing overall power consumption.

### Brief Description of the Drawings

The present disclosure is illustrated by way of example and is not limited by the accompanying figures, in which like references indicate similar elements. Elements in the figures are illustrated for simplicity and clarity and have not necessarily been drawn to scale.
FIG. 1 is a circuit diagram of an example of a Power Factor Correction (PFC) circuit, according to some embodiments.
FIG. 2 is a block diagram of an example of a PFC controller, according to some embodiments.
FIGs. 3 and 4 are graphs illustrating examples of switching waveforms during positive and negative mains phases, respectively, according to some embodiments.
FIGs. 5 and 6 are graphs illustrating examples of normal and boost mode operations performed by the example PFC circuit and controller, according to some embodiments.
FIGs. 7 and 8 are graphs illustrating examples of switching waveforms during positive and negative mains phases when operating the example PFC controller, according to some embodiments.

### Detailed Description

Power supplies convert electrical energy from a source, such as a wall outlet, into the correct voltage, current, and frequency required by electronic devices. They are used in a wide range of applications, from small gadgets to large industrial machines.

Power Factor Correction (PFC) circuits are used to improve the power factor and reduce wasted power, especially in devices that draw significant power from the mains. Converters in power supplies transform AC (alternating current) from the mains to DC (direct current) required by electronic devices and can adjust voltage levels as needed.

At low output power levels, burst mode operation may be used to improve efficiency. In burst mode, the power supply switches on and off periodically to maintain the output voltage, reducing overall power consumption. However, during burst mode or low power operation, the bootstrap capacitor can discharge, affecting the ability to drive the high-side switch and leading to voltage drops on the output. This can result in inefficiencies and potential operational issues for the connected load.

Existing solutions to maintain the charge of the bootstrap capacitor during burst mode operation often involve limiting the off period in burst mode, which requires regular switching periods to charge the output capacitor. This can lead to an undesired increase in the output voltage if the load is low, necessitating the application of a minimum load to keep the output voltage within limits. Such approaches can increase the no-load or low-load input power, which is generally undesirable. Additionally, some solutions use charge pumps, which add complexity and cost to the design.

To address these, and other concerns, systems and methods described herein may provide PFC circuits and controllers that ensure the bootstrap capacitor remains charged during burst mode operation. By detecting a negative peak of the mains voltage and using this moment to drive the low-side switch, the bootstrap capacitor may be charged without affecting the output voltage.

As such, these systems and methods maintain efficiency and proper operation of the power supply, even at low loads, addressing the challenges of low power levels. Additionally, these systems and methods may be implemented during operating modes, such as when the switching frequency becomes low with low load or after a load step from high load to low load, where the switching operation is suspended for some time due to an output voltage overshoot.

As used herein, the term "opportunistic charging" generally refers to the strategic activation of the low-side switch to charge the bootstrap capacitor at specific moments when it does not adversely affect the output voltage of the power converter. This may be achieved, for instance, by detecting the negative peak of the mains voltage and using this moment to drive the low-side switch. By doing so, the bootstrap capacitor can be charged efficiently during burst mode operation or low power conditions without causing voltage drops or inefficiencies in the power supply, which ensures that the bootstrap capacitor remains charged, maintaining the proper operation and efficiency of the power supply even at low loads.

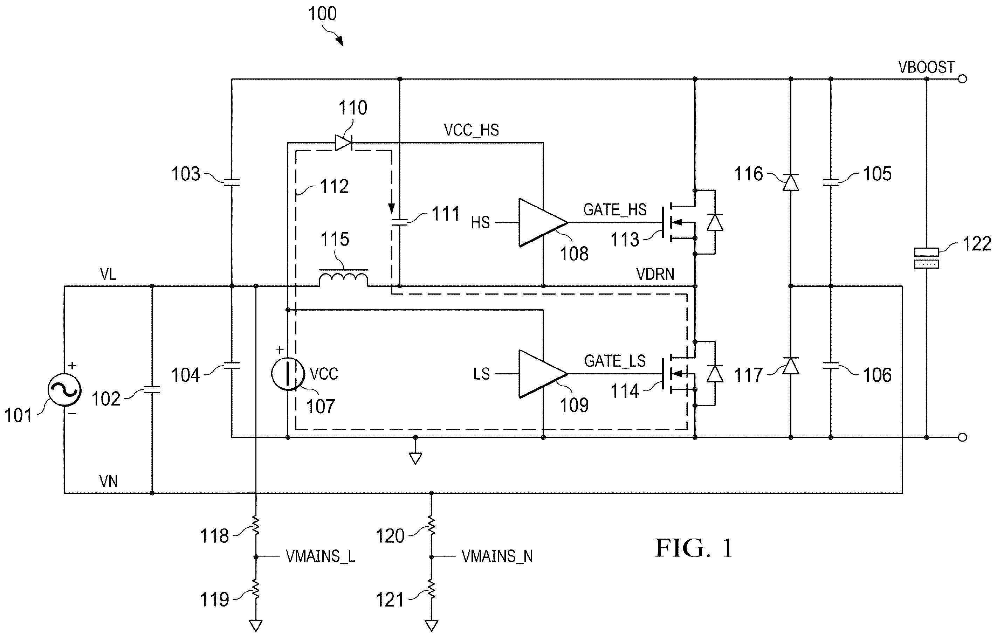

To illustrate this, FIG. 1 depicts an example of PFC circuit 100. In various embodiments, PFC circuit 100 may be used to power the operation of any component of any electronic device or load coupled to its output voltage (VBOOST) terminal across output capacitor 122 based on mains voltage source 101. In this case, a totem pole PFC topology is shown for high efficiency, with individual components coupled as shown.

Particularly, mains 101 supplies voltage to PFC circuit 100. Capacitor 102 may be used for differential mode noise filtering. In some implementations, such filtering may be performed with several inductors and capacitors, but for simplicity of illustration only capacitor 102 is shown. Meanwhile, capacitors 103-106 are filter capacitors for common mode noise filtering.

Voltage source 107 is a DC power supply that supplies a voltage (VCC) to gate drivers 108 and 109. A high side supply VCC_HS is provided by a bootstrap circuit including diode 110 and capacitor 111. When the voltage at the node (VDRN) between high-side switch 113 and low-side switch 114 is low (e.g., close to zero), diode 110 conducts and charges capacitor 111. Capacitor 111 in turn buffers the energy to supply DRV_HS to gate driver 108 along current path 112.

When VDRN is at a high voltage, diode 110 blocks the current flow and gate driver circuit 108 is supplied from capacitor 111. In some cases, diode 110 may be replaced by an active switch with control circuitry.

High-side switch 113 and low-side switch 114 are switching elements (*e.g*., 100 kHz) and inductor 115 boosts the mains voltage 101 to VBOOST. VBOOST is generally higher than (the peak of) mains voltage 101. Typically, VBOOST may have a value of around 400 V for a general application. Output capacitor 122 buffers VBOOST.

Diodes 116 and 117 are rectifying diodes. In normal operation, diode 117 conducts during the positive mains phase (*i.e.,* 101 > 0 V), and diode 116 conducts during the negative mains phase (*i.e.,* 101 < 0V). In some applications diodes 116 and 117 may be replaced by active switches (*e.g*., to increase efficiency).

Resistors 118-121 form voltage dividers for mains voltage 101, namely VMAINS_L (VL) and VMAINS_N (VN), and are typically used for sensing the amplitude and phase of voltage dividers. In normal operation, bootstrap capacitor 111 is charged every switching cycle.

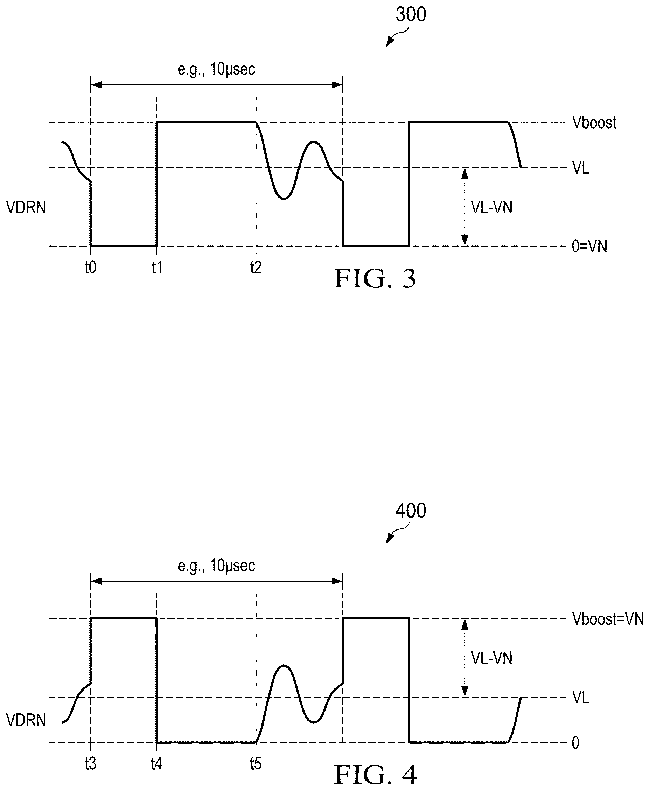

To illustrate this, FIGs. 3 and 4 show graphs 300 and 400 of examples of switching waveforms during positive and negative mains phases of PFC circuit 100, respectively. Particularly, in graph 300, a switching waveform is drawn for the voltage on the VDRN node during the positive mains phase when VL > VN. Low-side switch 114 is switched on between t0 to t1. From t0 to t1, VDRN is connected to ground via low-side switch 114. Capacitor 111 charges through the operation of voltage source 107, diode 110 and low-side switch 114. Low-side switch 114 may be driven between t1-t2 or the body diode of low-side switch 114 may be be used.

In graph 400, another switching waveform is drawn for the voltage on the VDRN node during the negative mains phase when VL < VN. Low-side switch 114 is switched on between t3 to t4. From t4 to t5, VDRN is approximately zero. Low-side switch 114 may be driven between t4-t5 or the body diode of low-side switch 114 may be used.

In normal operation, boostrap capacitor 111 is charged every switching cycle, but at very low output power levels it may be advantageous for efficiency reasons to operate in burst mode. The term "burst mode," as used herein, refers to an operational mode in power supplies where the converter switches on and off periodically to maintain its output voltage, reducing overall power consumption by minimizing the energy used during periods of low demand.

Circuit 100 may switch periodically to charge output capacitor 122, and then it may switch off. During the off period, a load connected to VBOOST (not shown) may be supplied by capacitor 122 while bootstrap capacitor 111 discharges. At very low loads, the off period may be sufficiently long which causes bootstrap capacitor 111 to discharge to a voltage which is too low to supply DRV_HS to gate driver 108. If the switching needs to restart to recharge capacitor 122 when VMAINS < 0, then low-side switch 114 cannot be switched on because supply voltage VCC_HS is too low.

This results in a voltage drop on VBOOST. Later, when VMAINS becomes greater than zero, switching element 114 may be driven and C_HS can recharge. So, a VBOOST voltage drop time of up to one half of a mains cycle (*e.g*., 10 msec for a 50 Hz mains) may occur. Moreover, the voltage drop on VBOOST may be too large for the load connected to VBOOST to remain operating properly.

To keep bootstrap capacitor 111 charged during burst mode operation, the off period in burst mode operation may be limited in time. But this means that switching periods would have to be present regularly, charging output capacitor 122. If the load on VBOOST is low, output capacitor 122 may charge to an undesired high voltage. Applying a minimum load on VBOOST may keep the output voltage within limits but also increases the no-load or low-load input power, which is generally undesirable.

To recharge bootstrap capacitor 111 while not charging output capacitor 122, systems and methods described herein may include driving low-side switch 114 during burst mode operation when the mains voltage is around its most negative voltage (negative mains peak). In this manner, VDRN is close to 0 V when low-side switch 114 is turned on and the charge starts. Because of this, there is no need to discharge capacitors 103-106-which may result in greater no-load efficiency. It also ensures that no power is delivered during the charge cycles to the output, which would otherwise result in a runaway of VBOOST. Capacitors 103-106 may be used to achieve good electromagnetic interference (EMI) results.

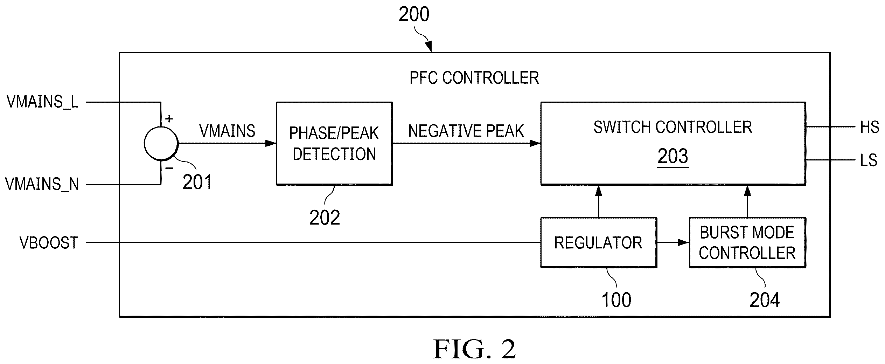

FIG. 2 is a block diagram of an example of PFC controller 200 usable to implement aspects of these systems and methods. In some embodiments, PFC controller 201 may include subtractor 201 configured to measure the AC mains 101 voltage via VMAINS_L and VMAINS_N. The VMAINS voltage signal may be processed in phase or peak detection circuit 202 to retrieve the time moment of the negative mains peak voltage. Regulator circuit 203 may regulate the output voltage VBOOST to a desired level.

Regulator 100 may be coupled to burst mode controller 204, which switches between normal mode and burst mode dependent on the PFC output power. Meanwhile, switch controller 203 may drive switches 113 and 114 via output signals HS and LS and receive its input from peak or phase detection circuit 202, regulator 100, or burst mode controller 204.

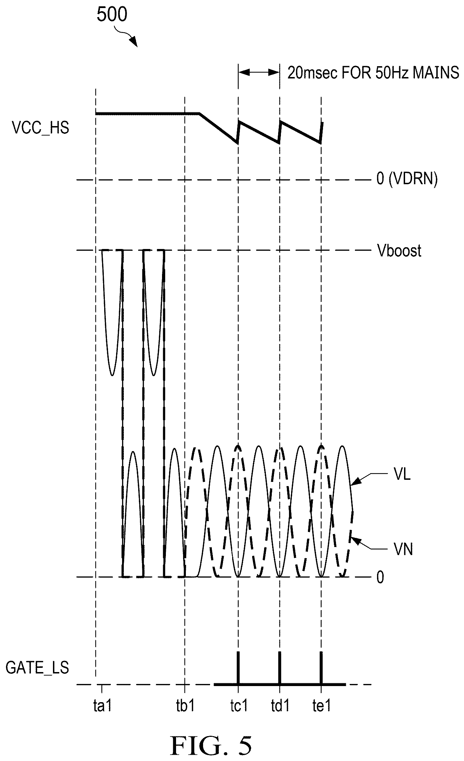

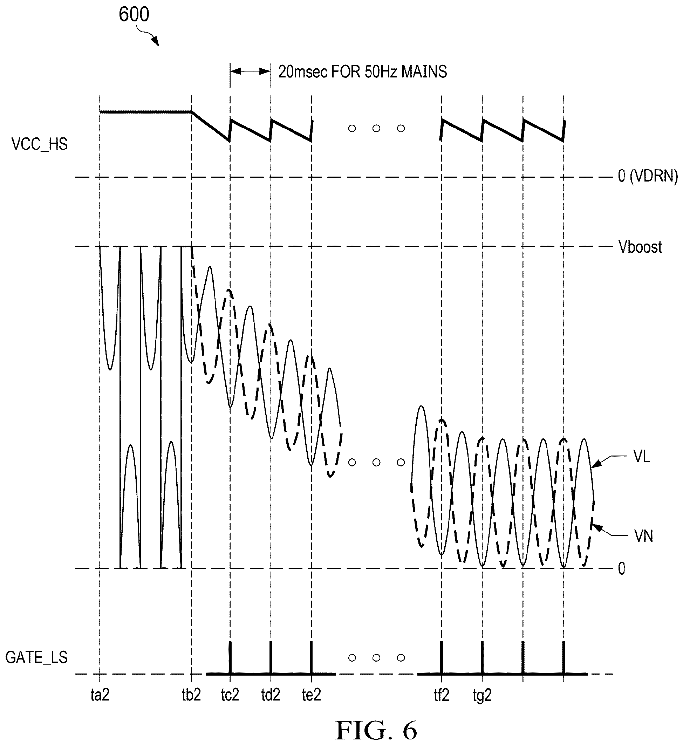

FIGs. 5 and 6 show graphs 500 and 600 illustrating examples of normal and boost mode operations performed by PFC circuit 100 and PFC controller 200, according to some embodiments. In graph 500, VL and VN are shown. Between ta1 and tb1, the converter is in normal operation or burst mode active period. The switching waveform of VDRN is also depicted.

Still referring to graph 500, at time tb1, the converter switches to the burst mode off period. Switching elements 113 and 114 are kept off, and VCC_HS drops. At times tc1, td1, and te1, low-side switch 114 is driven to its ON state for one or more switching cycles. During the ON state, VDRN is essentially zero and bootstrap capacitor 111 recharges. Because VMAINS was at its negative peak voltage, VL was already (close to) zero and nearly no energy is built up in inductor 115 during the ON period of switching elements 114. If energy accumulated in inductor 115, it would flow into output capacitor 112. Note that VN is low (essentially zero) when the burst off period starts at tb1.

Now referring to graph 600, between ta2 and tb2 the converter is in normal operation or burst mode active period. VN is high (essentially equal to the boost voltage) when the burst off period starts at tb2. Capacitors 103-106 are mainly changed to a high voltage. Now when bootstrap capacitor 111 is recharged by one or more switching cycles of low-side switch 114 at tc2, td2, te2, etc., capacitors 103-106 discharge and VN and VL drops. After tg2, capacitors 103-106 have discharged and at the negative mains peak voltage VL is zero, as in graph 500.

During the switching and discharge of capacitors 103-106 the energy stored in these capacitors flow to output capacitor 112. But as typically capacitors 103-106 are much smaller in value than output capacitor 112 (some 10nF for capacitors 103-106 and 100 uF or more for output capacitor 112), the output voltage may not increase notably. GATE_LS is also shown in graphs 500 and 600 and appear as small spikes.

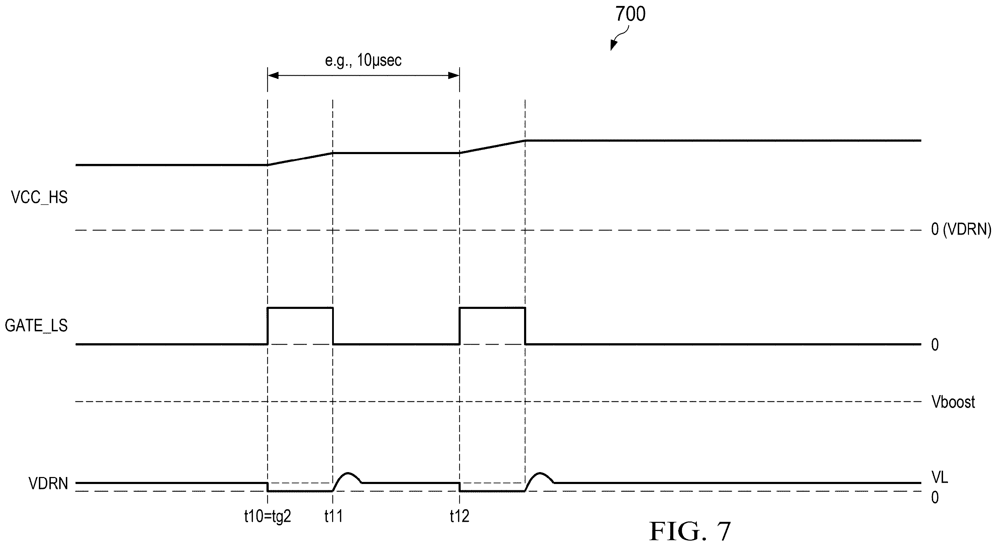

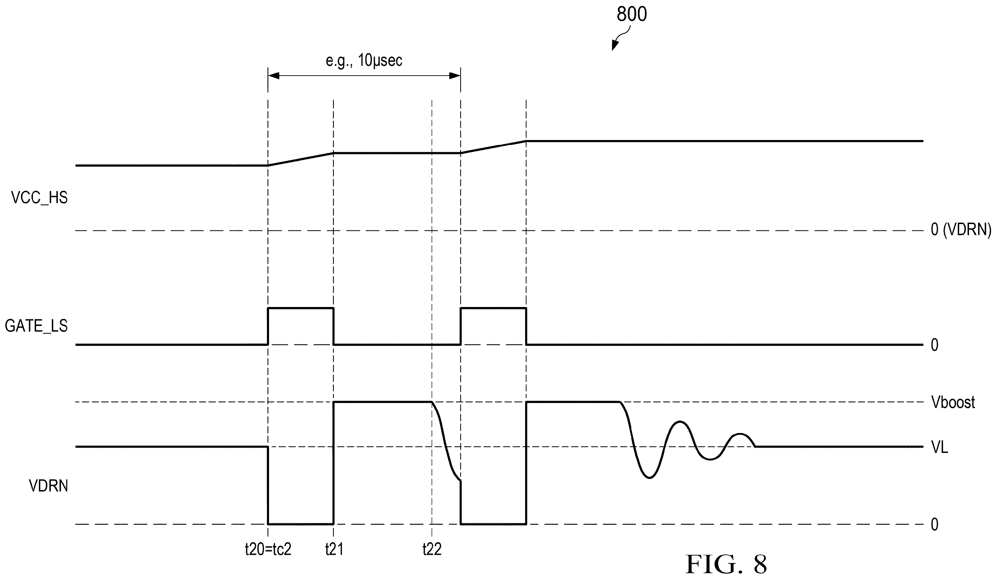

FIGs. 7 and 8 show graphs 700 and 800 illustrating examples of switching waveforms during positive and negative mains phases when operating PFC controller 200, according to some embodiments. In graph 700, the switching waveforms of GATE_LS and VDRN are shown for the negative peak of VL close to zero during the burst off period. GATE_LS is high, low-side switch 114 is ON between t10 and t11. VDRN is low. Bootstrap capacitor 111 charges as previously described. After t11, VDRN may rise, but the small amount of energy built up in inductor 115 between t10 and t11 is not enough to increase VDRN to VBOOST, so no energy is transferred to output capacitor 112. In graph 700, t10 is equal to tg2 shown in graph 600 such that the switching cycles start at (or around) the negative mains peak voltage.

In graph 800, the switching waveforms of GATE_LS and VDRN are shown for VL not close to zero at the start of the burst off period. GATE_LS is high, low-side switch 114 is ON, from t20 to t21. VDRN is low. Bootstrap capacitor 111 charges as previously described. After t21, VDRN rises to VBOOST, and the energy stored in inductor 115 between t20 and t21 is transferred to output capacitor 112 during t21 to t22. In graph 800, t20 is equal to tc2 such that the switching cycles start at (or around) the negative mains peak voltage.

In graphs 700 and 800, two switching cycles are drawn. In some cases, the number of switching cycles may be one or more depending upon on how long it takes to recharge bootstrap capacitor 111 to a desired voltage. Additionally, or alternatively, PFC controller 200 may switch every other or every n-th mains cycle. For example, around tc1 and te1, but not around tb1 and td1. Moreover, depending upon how fast VCC_HS discharges, more or fewer switching cycles may be used, and switching periods may be skipped.

It should be noted that the time scale of graphs 500 and 600 is different than in graphs 300, 400, 700, and 800. Graphs 500 and 600 have the time scale of the mains frequency (e.g., 20 msec for 50 Hz mains). Graphs 300, 400, 700, and 800 have a time scale of the switching frequency of PFC circuit 100 (typically well above 20 kHz). Also, in graphs 700 and 800 VCC_HS is drawn with respect to the VDRN node, the local ground for DRV_HS and bootstrap capacitor 111.

In various embodiments, systems and methods described herein may detect the negative mains peak voltage time (or just around the negative mains peak) by measuring the mains voltage and using that trigger to drive low-side switch 114 to charge bootstrap capacitor 111. PFC controller 200 may be in burst mode operation or exiting burst mode operation, but other operation modes are not excluded.

As such, systems and methods for PFC circuits with opportunistic charging of bootstrap capacitors are described. In various implementations, these systems and methods may be used to power the operation of any component of any electronic device. In an illustrative, non-limiting embodiment, a power supply may include: a power converter having a high-side switch, a low-side switch coupled to the high-side switch, and a bootstrap capacitor coupled between the high-side switch and the low-side switch; and a control circuit coupled to the low-side switch, the control circuit configured to activate the low-side switch and charge the bootstrap capacitor without changing an output voltage of the power converter.

The bootstrap capacitor may be coupled in series with a diode. The diode may be coupled to a voltage source, and the bootstrap capacitor may be coupled between the high-side and low-side switches. A control circuit may be configured to activate the low-side switch to charge the bootstrap capacitor while the high-side switch is turned off. The control circuit may be configured to activate the low-side switch to charge the bootstrap capacitor in response to a mains voltage reaching its negative peak.

Additionally, or alternatively, the control circuit may be configured to activate the low-side switch in response to the power supply operating in burst mode, a non-switching mode, or a low frequency switching mode. Additionally, or alternatively, the control circuit is configured to activate the low-side switch in response to receiving a mode active signal. Additionally, or alternatively, the control circuit may be configured to activate the low-side switch for one or more switching cycles.

Additionally, or alternatively, the control circuit may be configured to activate the low-side switch following a selected pattern of switching cycles. The power supply of may include an inductor coupled between the high and low-side switches, where the control circuit is configured to turn the low-side switch off before the inductor accumulates sufficient energy to change the output voltage of the power converter.

In another illustrative, non-limiting embodiment, an electronic circuit includes: a power converter having a high-side switch, a low-side switch coupled to the high-side switch, an output capacitor coupled across the high-side and low-side switches, and a bootstrap capacitor coupled between the high-side low-side switches; and a control module coupled to the power converter, where the control module is configured to activate the low-side switch to opportunistically charge the bootstrap capacitor without increasing an electrical charge across the output capacitor.

The control module may be configured to activate the low-side switch while the high-side switch is turned off. Additionally, or alternatively, the control module may be configured to activate the low-side switch in response to an input voltage reaching its negative peak. Additionally, or alternatively, the control module may be configured to activate the low-side switch in response to at least one of: the power supply operating in burst mode, or receiving a burst mode active signal. Additionally, or alternatively, the control module may be configured to activate the low-side switch for one or more switching cycles. Additionally, or alternatively, the control module may be configured to activate the low-side switch following an alternating pattern of switching cycles.

In yet another illustrative, non-limiting embodiment, a method may include: entering a selected mode of operation in a power converter having a bootstrap capacitor coupled between a low-side and a high-side switch; and, in response, activating the low-side switch to charge the bootstrap capacitor without affecting an output of the power converter.

The method may also include activating the low-side switch following a pattern of switching cycles. The selected mode of operation may include a burst mode. Additionally, or alternatively, the selected mode of operation may include a non-switching mode or a low frequency switching mode.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A power supply, comprising:
a power converter having a high-side switch, a low-side switch coupled to the high-side switch, and a bootstrap capacitor coupled between the high-side switch and the low-side switch; and
a control circuit coupled to the low-side switch, the control circuit configured to activate the low-side switch and charge the bootstrap capacitor without changing an output voltage of the power converter.

2. The power supply of claim 1, wherein the bootstrap capacitor is coupled in series with a diode.

3. The power supply of claim 2, wherein the diode is coupled to a voltage source, and wherein the bootstrap capacitor is coupled between the high-side and low-side switches.

4. The power supply of any preceding claim, wherein the control circuit is configured to activate the low-side switch to charge the bootstrap capacitor while the high-side switch is turned off.

5. The power supply of any preceding claim, wherein the control circuit is configured to activate the low-side switch to charge the bootstrap capacitor in response to a mains voltage reaching its negative peak.

6. The power supply of any preceding claim, wherein the control circuit is configured to activate the low-side switch in response to the power supply operating in burst mode, a non-switching mode, or a low frequency switching mode.

7. The power supply of claim 6, wherein the control circuit is configured to activate the low-side switch in response to receiving a mode active signal.

8. The power supply of any preceding claim, wherein the control circuit is configured to activate the low-side switch for one or more switching cycles.

9. The power supply of any preceding claim, wherein the control circuit is configured to activate the low-side switch following a selected pattern of switching cycles.

10. The power supply of any preceding claim, further comprising an inductor coupled between the high and low-side switches, wherein the control circuit is configured to turn the low-side switch off before the inductor accumulates sufficient energy to change the output voltage of the power converter.

11. A method, comprising:
entering a selected mode of operation in a power converter having a bootstrap capacitor coupled between a low-side and a high-side switch; and
in response, activating the low-side switch to charge the bootstrap capacitor without affecting an output of the power converter.

12. The method of claim 11, further comprising activating the low-side switch following a pattern of switching cycles.

13. The method of claim 11 or 12, wherein the selected mode of operation comprises a burst mode.

14. The method of any one of claims 11 to 13, wherein the selected mode of operation comprises a non-switching mode or a low frequency switching mode.
